Europäisches Patentamt

European Patent Office

Office européen des brevets

(19)

(11) Veröffentlichungsnummer: **0 471 685 B1**

## (12) EUROPÄISCHE PATENTSCHRIFT

(45) Veröffentlichungstag der Patentschrift: **02.02.94**

(51) Int. Cl.5: **C25D 13/20**

(21) Anmeldenummer: **90906221.8**

(22) Anmeldetag: **25.04.90**

(86) Internationale Anmeldenummer:
**PCT/EP90/00669**

(87) Internationale Veröffentlichungsnummer:
**WO 90/13686 (15.11.90 90/26)**

(54) **VERFAHREN ZUR BESCHICHTUNG ELEKTRISCH LEITFÄHIGER SUBSTRATE.**

(30) Priorität: **09.05.89 DE 3915080**

(43) Veröffentlichungstag der Anmeldung:
**26.02.92 Patentblatt 92/09**

(45) Bekanntmachung des Hinweises auf die
Patenterteilung:
**02.02.94 Patentblatt 94/05**

(84) Benannte Vertragsstaaten:
**AT BE CH DE DK ES FR GB IT LI NL SE**

(56) Entgegenhaltungen:
**FR-A- 2 384 554**
**US-A- 3 488 273**
**US-A- 3 616 394**

(73) Patentinhaber: **BASF Lacke + Farben AG**
**Glasuritstrasse 1**
**D-48165 Münster-Hiltrup(DE)**

(72) Erfinder: **BERG, Jan**
**Templerweg 52**
**D-4400 Münster(DE)**
Erfinder: **BÜRSTINGHAUS, Rainer**
**Robert-Koch-Strasse 2**
**D-4404 Telgte(DE)**
Erfinder: **STREITBERGER, Hans-Joachim**
**Linckensstrasse 21**
**D-4400 Münster(DE)**
Erfinder: **HAMBRECHT, Jürgen**
**Am Klosterwald 31**
**D-4400 Münster(DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

EP 0 471 685 B1

**Beschreibung**

Die Erfindung betrifft ein Verfahren zur Beschichtung elektrisch leitfähiger Substrate, bei dem

(1) das Substrat in einen wäßrigen Elektrotauchlack, der mindestens ein kathodisch abscheidbares Bindemittel enthält, eingetaucht wird

(2) das Substrat als Kathode geschaltet wird

(3) durch Gleichstrom ein Film auf dem Substrat abgeschieden wird

(4) das Substrat aus dem Elektrotauchlack entfernt wird und

(5) der abgeschiedene Lackfilm eingebrannt wird.

Die oben beschriebene kathodische Elektrotauchlackierung ist ein vor allem zum Grundieren häufig angewandtes Lackierverfahren.

Verfahren der oben beschriebenen Art werden z.B. in folgenden Patentdokumenten offenbart: DE-OS-35 18 732, DE-OS-35 18 770, EP-A-4090, EP-A-12463, DE-PS-34 45 857, EP-A-59 895, EP-A-74 634, US-PS-3,984,299, EP-A-70 550 und DE-OS-27 01 002.

Die der vorliegenden Erfindung zugrundeliegende Aufgabenstellung liegt in der Verbesserung des oben beschriebenen Verfahrens.

Diese Aufgabe wird überraschenderweise durch ein Verfahren gemäß Oberbegriff des Patentanspruchs 1 gelöst, bei dem als Substrat ein elektrisch leitfähiges Substrat eingesetzt wird, das mit einer durch Plasma-Polymerisation erzeugten Schicht beschichtet ist.

Die erfindungsgemäß eingesetzten Elektrotauchlackbäder können prinzipiell alle für die Herstellung von Elektrotauchlackbädern geeigneten kathodisch abscheidbaren fremd- oder selbstvernetzenden Kunstharze enthalten. Die erfindungsgemäß eingesetzten Elektrotauchlackbäder können auch Mischungen unterschiedlicher kathodisch abscheidbarer Kunstharze enthalten.

Bevorzugt sind jedoch die Elektrotauchlackbäder, die kationische, aminmodifizierte Epoxidharze als kathodisch abscheidbare Kunstharze enthalten. Es sind sowohl selbst- als auch fremdvernetzende kationische aminmodifizierte Epoxidharze bekannt. Bevorzugt werden fremdvernetzende kationische aminmodifizierte Epoxidharze eingesetzt.

Unter kationischen aminmodifizierten Epoxidharzen werden kationische Reaktionsprodukte aus

(A) ggf. modifizierten Polyepoxiden und

(B) Aminen

verstanden.

Unter Polyepoxiden werden Verbindungen verstanden, die zwei oder mehr Epoxidgruppen im Molekül enthalten.

Besonders bevorzugte (A)-Komponenten sind Verbindungen, die herstellbar sind durch Umsetzung von

(a) einer Diepoxidverbindung oder eines Gemisches von Diepoxidverbindungen mit einem Epoxidäquivalentgewicht unter 2000 mit

(b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (a) und (b) in einem Molverhältnis von 10 : 1 bis 1 : 1, bevorzugt 4 : 1 bis 1,5 : 1, eingesetzt werden und die Umsetzung der Komponente (a) mit der Komponente (b) bei 100 bis 190° gegebenenfalls in Anwesenheit eines Katalysators durchgeführt wird (vgl. DE-OS-35 18 770).

Weitere besonders bevorzugte (A)-Komponenten sind Verbindungen, die herstellbar sind durch eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan.

EP 0 471 685 B1

Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen, wie Diethylamin oder Etyhlhexylamin oder Diamine mit sekundären Aminogruppen, z.B. N,N'-Dialkylalkylendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylesterd-verzweigter Fettsäuren, wie der Versaticsäure oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N,N'-diethanol, Hexandiol-1,6, Hexan1,4-Bis-(hydroximethyl)-cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Als Komponente (B) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl.. Geeignet sind ebenfalls Alkanolamine, wie z.B. Methylethanolamin, Diethanolamin u. dgl. Ferner sind Dialkylaminoalkylamine, wie z.B. Dimethylaminmoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (B)-Komponenten eingesetzt.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, bevorzugt Essigsäure) erzeugt werden.

Eine weitere Möglichkeit zur Einführung kationischer Gruppen in die Komponente (A) besteht in der Umsetzung von Epoxidgruppen der Komponente (A) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugte Elektrotauchlackbäder werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppie-

rungen der allgemeinen Formel $R^1$-0-C0- enthalten.

Der Rest $R^1$ bedeutet: $R^1$ = $R^2$0-C0-CH$_2$-, $R^3$-CHOK-CH$_2$-, $R^4$-CHOR$^5$-CHOH-CH$_2$-

$R^1$ = $R^2$0-C0-CH$_2$-, $R^3$-CHOH-CH$_2$-, $R^4$-CHOR$^5$-CHOH-CH$_2$-

$R^2$ = Alkyl

$R^3$ = H, Alkyl, $R^6$-O-CH$_2$- oder $R^6$-CO-O-CH$_2$-

$R^4$ = H oder Alkyl

$R^5$ = H, Alkyl oder Aryl

$R^6$ = Alkyl, Cycloalkyl oder Aryl

Bevorzugte Elektrotauchlackbäder werden erhalten, wenn als Vernetzungsmittel blockierte Polyisocyanate eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigne ten Mengenverhältnissen auch zur Herstellung der oben erwähnten teilblockierten Polyisocyanate verwendet werden.

Beispiele für Verbindungen, die mindestens zwei Gruppierungen der allgemeinen Formel $R^1$-O-CO enthalten, sind Bis(- carbalkoxymethyl)azelat, Bis-(carbalkoxymethyl)sebacat, Bis-(carbalkoxymethyl)-terephthalat, Bis-(2-hydroxybutyl)-acetat und Bis-(2-hydroxyethyl)-terephthalat.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Die erfindungsgemäß eingesetzten Elektrotauchbäder werden nach allgemein gut bekannten Methoden hergestellt. Die Synthese der kathodisch abscheidbaren Kunstharze erfolgt nach gut bekannten Methoden (vgl. z.B. DE-OS-35 18 732, DE-OS-35 18 770, EP-A-4090 und EP-A-12463) in organischen Lösemitteln. Die so erhaltenen Kunstharzlösungen bzw. -dispersionen werden in neutralisierter Form in eine wäßrige Phase überführt.

Pigmente werden vorzugsweise in Form einer Pigmentpaste in die wäßrige Dispersion der kathodisch abscheidbaren Harze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Die Pigmentpasten können im Prinzip alle für Elektrotauchlacke geeigneten Pigmente enthalten. Im allgemeinen ist Titandiosid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Toluidylrot und hydradisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Gewichtsverhältnis zwischen Pigment und kathodisch abscheidbarem Kunstharz 0,05 bis 0,5.

Die eingesetzten Elektrotauchlackbäder können neben dem kathodisch abscheidbaren Kunstharz und der Pigmentpaste noch weitere übliche Zusatzstoffe enthalten, wie z.B. Zusatzmittel, Antioxidantien, oberflächenaktive Mittel usw.

Der Festkörper der erfindungsgemäß eingesetzten Elektrotauchlackbäder beträgt vorzugsweise 7 bis 35 Gew.-Teile, besonders bevorzugt 12 bis 25 Gew.-Teile. Der pH-Wert der Elektrotauchlackbäder liegt zwischen 4 und 9, vorzugsweise zwischen 5 und 7,5.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35°C, bevorzugt zwischen 20 und 30°C liegen.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Es ist erfindungswesentlich, daß bei dem Verfahren gemäß Oberbegriff des Patentanspruchs 1 elektrisch leitfähige Substrate, z.B. Metalle, wie Stahl, Aluminium, Kupfer und dergleichen eingesetzt werden, die mit einer durch Plasma-Polymerisation erzeugten Schicht beschichtet sind.

Die Substrate können mit dem gut bekannten Verfahren der Plasma-Polymerisation (vgl. z.B. H. Yasuda, Plasma Polymerization, Academic Press Inc., Orlando, Florida (1985); N. Inagaki, H. Yasuda, Journal of Applied Polymer Science, Vol. 26, 3333-3341 (1981). EP-A-73924, US-PS-3,518,108; H. Suhr in Houben-Weyl, Bd. IV/56, S. 1559 (1975); J.R. Hollaham u. A.T. Bell, Techniques and Applications of Plasma Chemistry, J. Wiley, New York 1974; H.V. Boenig, Plasma Science and Technology, Carl Hauser-Verlag, München-Wien 1982; H.K. Yasuda, Plasma Polymerisation and Plasma Treatment, J. Wiley, New York 1984, H.K. Yasuda, Plasma Polymerisation, Acadamic Press New York 1985; H. Drost Plasma Chemie, Akademie-Verlag, Berlin 1978) beschichtet werden. Beim Beschichten durch Plasma-Polymerisation werden gasförmige Monomere bzw. Monomervorstufen in einer Plasmaentladung angeregt und die entsprechenden Polymere auf der Substratoberfläche abgeschieden. Es wird angenommen, daß die Monomeren bzw. Monomervorstufen im Plasma angeregt und auch fragmentiert werden, miteinander reagieren und über eine Oligomerbildung zur Kondensation auf der zu beschichtenden Oberfläche gebracht werden. Da auf die wachsende Schicht ständig weiter die elektrische Entladung mit Elektronen- und Ionenbeschuß einwirkt, führt dies zu einer weiteren Reaktion und zu einer hochgradigen Vernetzung des Polymerisats.

Als Beispiele für einsetzbare gasförmige Monomere bzw. Monomervorstufen werden genannt: Methan, Ethylen, Acetylen, Vinylchlorid, Acrylnitril, Alkyl(meth)acrylate, wie Methyl(meth)acrylat, Styrol, Vinylidenchlorid, Vinylacetat, Propylen, (Iso)-Butan, Butadien, Isopren, Vinylfluorid, Tetrafluorethylen, Vinylether, Vinylester, Ethylenoxid, Acrylsäure, Hexamethyldisilan, Tetramethyldisiloxan, Vinyltrimethoxysilan, Hexamethyldisiloxan, Divinyltetramethyldisiloxan, Trivinylphosphin, Divinylphosphin, Vinyldiphenylphosphin und Vinylalkylphosphine.

Die Beschichtung durch Plasmapolymerisation kann beispielsweise so erfolgen, daß das zu beschichtende Substrat zwischen die beiden Elektroden eines Plasmareaktors gebracht wird und der Reaktor auf etwa 10$^{-3}$kPa evakuiert wird. Durch ein Feindosierventil läßt man das Reaktionsgas, ggf. mit einem Trägergas vermischt, einströmen, ohne die Vakuumpumpe abzustellen. Zufluß- und Abflußventil werden so eingestellt, daß ein Gasdruck zwischen 10$^{-2}$ und 10 kPa resultiert. Nach Einschalten des Hochfrequenzgenerators zündet das Plasma - der Raum zwischen den Kondensatorplatten beginnt zu leuchten. Die Farbe des Plasmas hängt von der Art des aktivierten Gases ab und kann blaue, grüne oder rote Tönungen annehmen.

Die Form der Plasmazone läßt sich durch den Gasdruck und/oder die Frequenz des angelegten Feldes und/oder Überlagerungen durch weitere elektromagnetische Felder beeinflussen. Die Verweilzeit des Substrats sollte zwischen einigen Sekunden und etwa 10 Minuten betragen. Nach Beendigung der Plasmaphase wird entweder mit Luft oder Schutzgas bzw. mit einem konventionellen Monomeren (Plasma-Pfropfung) belüftet.

Die Erfindung wird im folgenden Ausführungsbeispiel näher erläutert.

1. Beschichtung eines leitfähigen Substrates mittels Plasmapolymerisation

Als Reaktor für die Plasmapolymerisation dient ein evakuierbarer Kessel in Form eines liegenden Zylinders mit innen eingebauten planparallel angeordneten plattenförmigen Elektroden. Die zu beschichtende Tafel aus gewalztem entfetteten Karosserieblech wird parallel zwischen den Elektroden angeordnet. Der Kessel wird mit einer Pumpe evakuiert. Während des Polymerisatsprozesses wird durch Pumpen und gleichzeitiges Einspeisen eines Monomer/Inertgasgemisches ein Druck von $8 \times 10^2$ Pa aufrechterhalten. Der Gasstrom wird auf 13 ml/min eingeregelt. Als Inertgas verwendet man Argon, als Monomer Vinyltrimethoxysilan, wobei der Partialdruck des Monomeren durch seinen Sättigungsdampfdruck bei Raumtemperatur gegeben ist. In einer elektrischen Entladung bei 30 kHz und einer Leistung von 150 Watt wird über einen Zeitraum von 10 Minuten die gewünschte Schicht abgeschieden. Anschließend werden der Hochfrequenzgenerator ausgeschaltet und die Anlage belüftet. Die abgeschiedene Schicht ist nach Beendigung des Prozesses als bräunlich-transparenter Film zu erkennen.

2. Herstellung wäßriger Kunstharzdispersionen auf Basis kationischer aminmodifizierter Epoxidharze

2.1 Herstellung einer Dispersion gemäß Beispiel B der EP-A-70550

|  | Einwaage (g) |
|---|---|
| – Epikote 829[1] | 727,6 |
| – Capa 200[2] | 268,4 |
| – Xylol | 36,1 |
| – Bisphenol A | 197,8 |
| – Dimethylbenzylamin | 3,8 |
| – Isocyanatvernetzer[3] | 901,3 |
| – Diketimin aus MIBK und Diethylentriamin 75 %ig in MIBK | 73,4 |
| – N-Methylethanolamin | 59,1 |
| – Hexylglykol | 76,5 |
| – Essigsäure | 33,5 |
| – Emulgatorgemisch[4] | 29,4 |
| – Deionisiertes Wasser | 1793,1 |

1) Epoxidharz der Shell Chemie, Epoxidäquivalent 188

2) Polyesterdiol der Interox Chemical

3) Isocyanatvernetzer auf Basis Toluylendiisocyanat mit Butylglykolverkappung und Umsetzung mit Trimethylolpropan im Verhältnis 3 : 1, angelöst in einer Mischung aus MIBK und n-Butanol (9 : 1) zu 70 % Festkörper

4) Emulgatorgemisch auf Basis von Geigy Amin C (Geigy Industrial Chemicals) 120 Teile, Surfy-

nol 104 (Air Products and Chemicals) 120 Teile,
Butylglykol, 120 Teile und 221 Teile deionisiertes Wasser mit 19 Teilen Eisessig.

MIBK = Methylisobutylketon

Herstellvorschrift
Epikote 829, Capa 200 und Xylol werden in einem Reaktionsgefäß vorgelegt und unter $N_2$-Schutzgas auf 210° erhitzt. Während einer halben Stunde wird dann Wasser ausgekreist. Danach kühlt man den Ansatz auf 150°C ab, gibt Bisphenol A und 1,6 Teile Dimethylbenzylamin zu. Man erhitzt dann auf 180°C und hält diese Temperatur eine halbe Stunde. Danach kühlt man auf 130°C und gibt die Restmenge Dimethylbenzylamin zu. Danach hält man die Temperatur für 2 1/2 Stunden, gibt dann den Isocyanatvernetzer, das Diketimin und N-Methylethanolamin zu und hält dann die Temperatur für eine halbe Stunde bei 110°C. Danach fügt man das Hexylglykol zu. Die Reaktionsmischung wird dann in dem deionisiertem Wasser, das Eisessig und Emulgatorgemisch enthält, dispergiert. Anschließend wird Vakuum angelegt, um die leicht flüchtigen organischen Lösemittel zu entfernen. Es wird ein Festkörper von 36 % eingestellt.

2.2 Herstellung eines Dispersion gemäß Beispiel 2 der DE-A-31 08 073
In einem Reaktionsgefäß werden 1093 Teile Araldit GY 2600 (Epoxidäquivalentgewicht EEW = 188, Epoxidharz auf Basis von Bisphenol A der Ciba Geigy), 151 Teile Neopentylglykol und 4,9 Teile Dimethylbenzylamin vorgelegt. Die Temperatur wird auf 131°C angehoben und gehalten, bis ein EEW von 415 erreicht ist. Danach gibt man 398 Teile Capa 200 (siehe Pkt. 2.1) und weitere 3,8 Teile Dimethylbenzylamin zu. Man hält die Temperatur bei 131°C, bis ein EEW von 1030 erreicht ist. Danach fügt man 1274 Teile des Vernetzers (siehe Pkt. 2.1) und 112 Teile des in 2.1 erwähnten Diketimins sowie 86 Teile N-Methylethanolamin zu und hält die Temperatur für 1 Stunde bei 112°C. Dann mischt man 135 Teile Phenoxypropanol und 40 Teile Methoxypropanol zu und mischt 15 Minuten unter. Diese Harzlösung wird in 3247 Teilen Wasser, 23,5 Teilen Eisessig und 21 Teilen Emulgatorgemisch (siehe Punkt 2.1) dispergiert.
Anschließend entfernt man im Vakuum die niedrigsiedenden Lösemittel und stellt einen Festkörper von 35 % ein.

3. Herstellung einer Pigmentpaste
3.1 Herstellung eines Reibharzes
Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80 %iger, wäßriger Milchsäure gegeben. Man führt die Reaktion bei 80°C durch, bis die Säurezahl unter 1 gefallen ist.

3.2 Herstellung der Pigmentpaste
1800 Teile des Reibharzes werden mit 2447 Teilen entionisiertem Wasser vorgelegt. Danach werden 2460 Teile $TiO_2$, 590 Teile eines Extenders auf Basis Aluminiumsilikat, 135 Teile Bleisilikat, 37 Teile Ruß und 25 Teile Bleioctoat zugegeben und vermengt. Diese Mischung wird in einem Mahlaggregat auf eine HegmanFeinheit von 5 bis 7 zerkleinert. Danach gibt man 1255 Teile entionisiertes Wasser zu, um die gewünschte Pastenkonsistenz zu erreichen.

4. Zubereitung der Elektrotauchlackbäder und Beschichtung des Substrats gemäß Pkt. 1.
500 Gewichtsteile der Dispersionen gemäß Pkt. 2.1 bzw. 2.2 werden mit 196 Teilen der Pigmentpaste gemäß Pkt. 3 versetzt und mit entionisiertem Wasser auf einen Badfestkörper von 20 Gew.-% eingestellt. Die Abscheidung der Lackfilme erfolgt während 2 Minuten bei 320 V. Die Badtemperatur beträgt 27°C. Die Filme werden nach dem Spülen mit destilliertem Wasser bei 180°C 20 Minuten eingebrannt.

**Patentansprüche**

1. Verfahren zur Beschichtung eines Substrates, bei dem
   (1) das Substrat in einen wäßrigen Elektrotauchlack, der mindestens ein kathodisch abscheidbares Kunstharz enthält, eingetaucht wird
   (2) das Substrat als Kathode geschaltet wird

(3) durch Gleichstrom ein Film auf dem Substrat abgeschieden wird

(4) das Substrat aus dem Elektrotauchlack entfernt wird und

(5) der abgeschiedene Lackfilm eingebrannt wird,

dadurch gekennzeichnet, daß als Substrat ein elektrisch leitfähiges Substrat eingesetzt wird, das mit einer durch Plasma-Polymerisation erzeugten Schicht beschichtet ist.

**Claims**

1. Process for the coating of electrically conducting substrates in which

(1) the substrate is immersed in an aqueous electrocoating paint comprising at least one cathodically depositable resin,

(2) the substrate is connected as cathode,

(3) a film is deposited on the substrate using direct current,

(4) the substrate is removed from the electrocoating paint and

(5) the deposited paint film is baked,

in which process an electrically conducting substrate coated by a coating produced by plasma polymerization is employed as substrate.

**Revendications**

1. Procédé pour enduire un subjectile électroconducteur , dans lequel

(1) on immerge le subjectile dans une peinture aqueuse pour électrodéposition, contenant au moins un résine pouvant subir une déposition cathodique,

(2) on monte le subjectile en cathode,

(3) à l'aide d'un courant continu, on dépose un feuil sur le subjectile,

(4) on retire le subjectile du bain d'électrodéposition, et

(5) on procède à une cuisson du feuil déposé,

caractérisé en ce qu'on utilise comme subjectile un subjectile électroconducteur enduit d'une couche produite par polymérisation au plasma.